**Europäisches Patentamt**

**European Patent Office**

**Office européen des brevets**

(11) Veröffentlichungsnummer: **0 321 823 B1**

(12) **EUROPÄISCHE PATENTSCHRIFT**

(45) Veröffentlichungstag der Patentschrift: **01.04.92**

(21) Anmeldenummer: **88120742.7**

(22) Anmeldetag: **12.12.88**

(51) Int. Cl.⁵: **H02J 3/36**, H02J 3/18

(54) **Verfahren und Vorrichtung zur Entkoppelung der Wirk- und Blindleistungsregelung bei einer zwei Netze verbindenden Hochspannungs-Gleichstrom-Übertragungsstrecke.**

(30) Priorität: **23.12.87 DE 3743997**

(43) Veröffentlichungstag der Anmeldung:
**28.06.89 Patentblatt 89/26**

(45) Bekanntmachung des Hinweises auf die Patenterteilung:
**01.04.92 Patentblatt 92/14**

(84) Benannte Vertragsstaaten:
**CH DE FR GB LI SE**

(56) Entgegenhaltungen:
**EP-A- 0 067 978**
**EP-A- 0 156 396**
**EP-A- 0 237 032**
**FR-A- 2 073 139**
**US-A- 3 949 291**

(73) Patentinhaber: **SIEMENS AKTIENGESELL-SCHAFT**
**Wittelsbacherplatz 2**
**W-8000 München 2(DE)**

(72) Erfinder: **Weibelzahl, Manfred, Dipl.-Ing.**
**Eichenweg 10**
**W-8525 Uttenreuth(DE)**
Erfinder: **Wild, Georg**
**Zedernstrasse 20**
**W-8521 Langensendelbach(DE)**

## Beschreibung

Die Erfindung betrifft ein Verfahren zur Regelung der Wirk- und Blindleistungsübertragung zwischen zwei elektrischen Netzen, welche über eine insbesondere als Kurzkupplung ausgeführte Hochspannungs-Gleichstrom-Übertragungsstrecke ("HGÜ"-Strecke) verbunden sind, gemäß dem Oberbegriff von Anspruch 1. Die Erfindung betrifft ferner eine Regelungsvorrichtung für die Wirk- und Blindleistungsübertragung.

Aus der DE-OS 19 62 042 ist bereits ein Verfahren zur Regelung des Leistungsfaktors oder der Spannung in einem Drehstromnetz mittels einer Hochspannungs-Gleichstrom-Kurzkupplung bekannt. Dabei soll neben dem Wirklastverhalten auch das Blindlastverhalten durch ein geeignetes Steuerverfahren der Stromrichteranlage der HGÜ-Strecke beeinflußt werden. Hierzu wird gleichzeitig eine Verstellung von Gleichstrom und Gleichspannung auf der HGÜ-Strecke nach vorbestimmten Funktionen vorgenommen. Dabei werden z.B. zum Betrieb mit einem konstanten Leistungsfaktor die Sollwerte sowohl für den Strom-, als auch für den Spannungsregler z.B. abhängig vom aktuellen Wirkleistungssollwert mittels eines Funktionsbildners getrennt vorgegeben.

Anhand der nachfolgend kurz angeführten Figuren wird ein bekannter Stand der Technik und die Erfindung desweiteren näher erläutert. Dabei zeigt:

FIG 1 eine bekannte Regelungsstruktur zur Beeinflussung der Umrichter einer HGÜ-Strecke,

FIG 2 einen Ausschnitt aus einem den Zusammenhang zwischen den Parametern Wirkleistung, Blindleistung, Gleichstrom und Steuerwinkel darstellenden Kennlinienfeld für einen bei kleinen und mittleren Steuerwinkeln betriebenen Umrichter,

FIG 3 einen Ausschnitt aus einem Kennlinienfeld entsprechend FIG 2 für einen bei mittleren und großen Steuerwinkeln betriebenen Umrichter,

FIG 4 eine Ausführungsform der erfindungsgemäßen Regelungsvorrichtung für eine HGÜ-Strecke,

FIG 5 eine weitere Ausgestaltung der erfindungsgemäßen Ausführungsform der Regelungsvorrichtung von FIG 4,

FIG 6 eine weitere Ausführungsform der erfindungsgemäßen Regelungsvorrichtung für eine HGÜ-Strecke,

FIG 7 eine weitere Ausgestaltung der erfindungsgemäßen Ausführungsform der Regelungsvorrichtung von FIG 6,

FIG 8 die Sinusfunktion des Phasenverschiebungswinkels zwischen Strom und Spannung in einem der Netze, und

FIG 9 die auf die ideelle Gleichspannung und den Gleichstrom bezogene Sinusfunktion des Phasenverschiebungswinkels zwischen Strom und Spannung in einem der Netze.

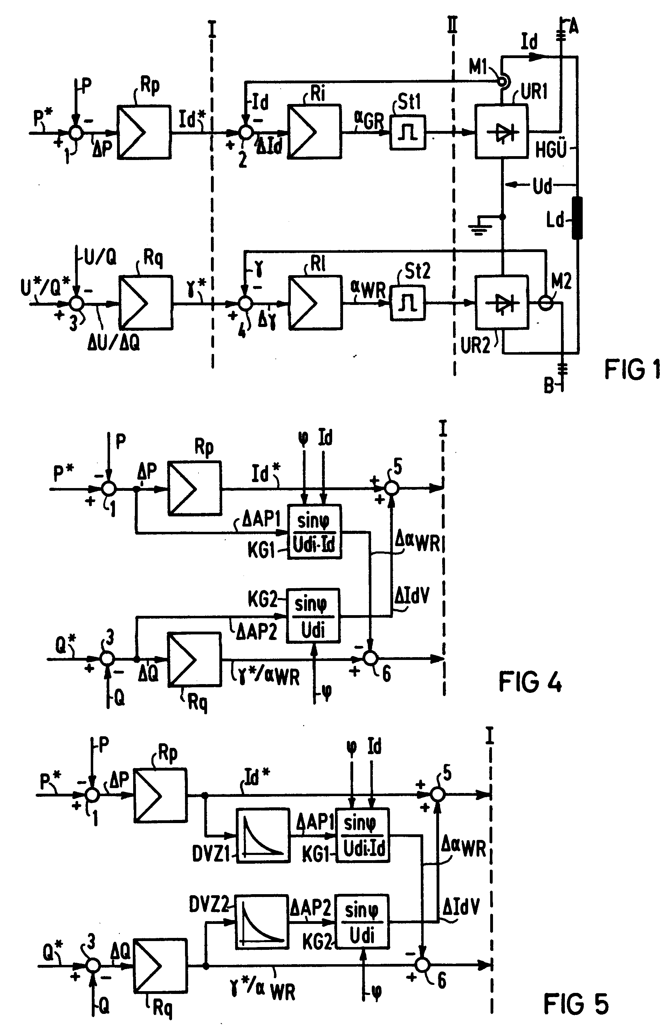

In der FIG 1 ist eine bekannte Regelungsstruktur für eine Hochspannungs-Gleichstrom-Übertragungsstrecke ("HGÜ-Strecke") dargestellt. Dabei sind zwei, insbesondere dreiphasige Energieversorgungsnetze A und B über je einen steuerbaren Umrichter UR1 bzw. UR2 an die Enden einer HGÜ-Strecke angekoppelt. Die elektrischen Parameter der Strecke sind mit den Bezugszeichen Id für den Gleichstrom und Ud für die Gleichspannung versehen. Desweiteren ist eine Glättungsinduktivität Ld zur Dämpfung von Oberschwingungen in der HGÜ-Strecke beispielhaft dargestellt. Abhängig von der gewünschten Richtung der Energieübertragung über die Strecke arbeitet jeweils einer der beiden Umrichter UR1, UR2 als ein Gleichrichter und der andere als ein Wechselrichter. In der Darstellung der FIG 1 sei angenommen, daß der Umrichter UR1 im Gleichrichterbetrieb und der Umrichter UR2 im Wechselrichterbetrieb arbeitet.

Zur Regelung der Wirkleistung P und der Netzspannung U bzw. der Blindleistung Q in einem der beiden Netzen dienen zwei Kaskadenregelungen. Diese wirken jeweils auf eine der beiden Umrichter ein und sind in der FIG 1 auf der linken Seite der senkrechten, mit II markierten strichlierten Linie dargestellt. Rechts bzw. links einer weiteren, mit I markierten strichlierten Linie sind die unterlagerten bzw. übergeordneten Regler der jeweiligen Kaskadenregelung dargestellt. So wird bei der ersten Kaskadenregelung die mittels einer Mischungsstelle 1 aus einem Wirkleistungssollwert P* und einem Wirkleistungsistwert P gebildete Regelabweichung $\Delta$P einem übergeordneten Wirkleistungsregler Rp zugeführt. Dessen Ausgangssignal dient als Sollwert Id* für den Wert des Gleichstromes auf der HGÜ-Strecke. Die dazugehörige Regelabweichung wird mittels einer zweiten Mischungsstelle 2 durch Vergleich mit dem Gleichstromistwert Id gebildet und einem unterlagerten Gleichstromregler Ri zugeführt. Dieser bildet schließlich den aktuellen Steuerwinkel $\alpha_{GR}$ für den im Beispiel der FIG 1 als Gleichrichter betriebenen Umrichter UR1, welcher in einem ersten Steuersatz St1 in entsprechende Zündimpulse für die Halbleiterschaltelemente des Umrichters umgesetzt wird.

Die zweite Kaskadenregelung wirkt auf den im Beispiel der FIG 1 als Wechselrichter betriebenen Umrichter UR2. Ein übergeordneter Regler Rq kann dabei abhängig vom konkreten Anwendungsfall sowohl als ein Regler für die Netzspannung U, als auch als ein Regler für die Blindleistung Q in einem der beiden Netze dienen. So wird die Spannungs- bzw. Blindleistungsregelabweichung $\Delta U/\Delta Q$ für diesen Regler durch Vergleich der entsprechenden Sollwerte U*/Q* mit den dazugehörigen Istwerten U/Q in einer dritten Mischungsstelle 3 gebildet. In dem in der FIG 1 dargestellten Beispiel dient das Ausgangssignal dieses übergeordneten Reglers Rq als Sollwert $\gamma^*$ für den Löschwinkel des Wechselrichters UR2. Die dazugehörige Regelabweichung $\Delta\gamma$ wird durch Vergleich mit dem Löschwinkelistwert $\gamma$ in einer vierten Mischungsstelle 4 gebildet und einem unterlagerten Löschwinkelregler R1 zugeführt. Dieser stellt schließlich den Steuerwinkel $\alpha_{WR}$ für den Wechselrichter UR2 zur Verfügung, der in einem weiteren Steuersatz St2 in entsprechende Zündimpulse für die Halbleiterschaltelemente umgesetzt wird. Der Wechselrichter beeinflußt entsprechend dem aktuellen Wert des Steuerwinkels $\alpha_{WR}$ die Gleichspannung Ud auf der HGÜ-Strecke nach Betrag und Vorzeichen in geeigneter Weise.

In einer nicht dargestellten Ausführungsform kann der unterlagerte Löschwinkelregler R1 auch entfallen. In diesem Fall gibt der übergeordnete Spannungs- oder Blindleistungsregler Rq den Steuerwinkel $\alpha_{WR}$ für den Wechselrichter UR2 direkt vor. In einer weiteren Ausführungsform kann als Stellgröße für den Umrichter UR2 statt dem Steuerwinkel $\alpha_{WR}$ auch der den Überlappungswinkel u berücksichtigende Voreilwinkel $\beta$ bzw. der Löschwinkel $\gamma$ direkt verwendet werden.

Die Funktionsweise der bekannten Schaltung von FIG 1 wird desweiteren anhand des Kennlinienfeldes von FIG 2 kurz erläutert. Hierzu wird angenommen, daß der übergeordnete Regler Rq der zweiten Kaskadenregelung die Blindleistung in einem der Netze beeinflußt. Dementsprechend zeigt das Kennlinienfeld der FIG 2 den Zusammenhang zwischen Wirkleistung P und Blindleistung Q, bezogen auf den jeweiligen Nennwert $P_N$ bzw. $Q_N$. Als weitere Parameter enthält das Kennlinienfeld den Gleichstrom Id auf der HGÜ-Strecke und den Steuerwinkel $\alpha_{GR}$ bei Gleichrichterbetrieb des jeweiligen Umrichters bzw. den Löschwinkel $\gamma_{WR}$ bei Wechselrichterbetrieb des jeweiligen Umrichters. Unter der Voraussetzung, daß die Umrichter UR1 und UR2 der HGÜ-Strecke der FIG 1 nicht mit zusätzlichen, zu- und abschaltbaren Blindleistungserzeugern ausgerüstet sind, z.B. Kondensatorbänken, Glättungsdrosseln bzw. Transformatorstufenschaltern, zeigt das Kennlinienfeld alle zulässigen Arbeitspunkte unabhängig davon, ob der jeweilige Umrichter als Gleichrichter bzw. Wechselrichter betrieben wird. Der in der FIG 2 dargestellte Ausschnitt des Kennlinienfeldes ist so gewählt, daß daraus bevorzugt die Arbeitspunkte zu entnehmen sind, welche bei kleinen und mittleren Werten des Gleichrichtersteuerwinkels bzw. Wechselrichterlöschwinkels bis ca. 60° el. auftreten. Bei Vernachlässigung des arbeitspunktabhängigen Einflusses der Überlappung auf die einzelnen Parameter des Kennlinienfeldes stellen die sich bei konstantem Gleichrichtersteuerwinkel bzw. Wechselrichterlöschwinkel ergebenden Kennliniengeraden dar, welche durch den nicht dargestellten Ursprung des Diagrammes laufen. In einem solchen Fall wäre der Gleichrichtersteuerwinkel bzw. Wechselrichterlöschwinkel identisch mit dem Lastwinkel $\phi$ auf der Netzseite des jeweiligen Umrichters. In der FIG 2 ist beispielhaft eine solche Gerade für einen Lastwinkel von $\phi = 45°$ dargestellt.

Anhand von den in der FIG 2 dargestellten Übergängen von einem Arbeitspunkt AP1 auf AP2 bzw. von einem Arbeitspunkt AP3 auf AP4 wird die Funktionsweise der Schaltung von FIG 1 weiter erläutert.

So wandert der Arbeitspunkt eines Umrichters z.B. von AP1 nach AP2, wenn der Wirkleistungssollwert P* des Wirkleistungsreglers Rp um den Wert $\Delta P12$ geändert wird. Wäre in der Schaltung von FIG 1 nur die erste, aus dem übergeordneten Wirkleistungsregler Rp und dem untergeordneten Gleichstromregler Ri bestehende Kaskade in Betrieb, so würde sich in diesem Fall durch Veränderung des Gleichstromes Id um den Wert $\Delta Id12$ der Arbeitspunkt $AP1'$ einstellen. Würde danach die zweite Reglerkaskade aus dem übergeordneten Blindleistungsregler Rq und dem unterlagerten Löschwinkelregler R1 in Betrieb genommen, so würde hierdurch die unerwünschte Blindleistungsregelabweichung $\Delta Q12$ des Arbeitspunktes $AP1'$ gegenüber dem gewünschten Arbeitspunkt AP2 ausgeglichen werden, indem der Löschwinkel um den Wert $\Delta\gamma12$ verändert werden würde. Da im Normalfall beide Reglerkaskaden der Schaltung von FIG 1 in Betrieb sind, erfolgt der Übergang zwischen den Arbeitspunkt AP1 und AP2 tatsächlich auf der in der FIG 2 dargestellten Ortskurve OK12. Aus der FIG 2 ist zu entnehmen, daß zwischen der Wirkleistungsänderung $\Delta P12$, welche die Ursache für den Arbeitspunktübergang darstellt, und der davon mittels des Stelleingriffes des unterlagerten Reglers Ri verursachten Gleichstromänderung um den Wert $\Delta Id12$ ein spitzer Winkel $\delta12$ vorliegt. Aus diesem Grund kann die zweite Reglerkaskade aus dem Blindleistungs- und Löschwinkelregler eine aufgrund des Stelleingriffes des Gleichstromreglers hervorgerufene Blindleistungsregelabweichung durch Verstellen des Löschwinkels um den Wert $\Delta\gamma12$ so schnell ausgleichen, daß der Arbeitspunkt AP1 auf der Ortskurve OK12 ohne Überschwingen und mit einer kleinen, vorübergehenden Blindleistungsregelabweichung in den Arbeitspunkt AP2 übergeht.

In sehr ähnlicher Weise erfolgt der Übergang z.B. vom Arbeitspunkt AP3 auf der Ortskurve OK34 in den Arbeitspunkt AP4 bei einer Änderung des Blindleistungssollwertes um ΔQ34. Unter der Annahme, daß auch in diesem Fall zunächst nur die zweite Reglerkaskade aus dem übergeordneten Blindleistungsregler Rq und dem unterlagerten Löschwinkelregler R1 in Betrieb ist, würde der Arbeitspunkt AP3 aufgrund des Stelleingriffs des Reglers Rq durch eine Veränderung des Löschwinkels um den Wert $\Delta\gamma34$ zunächst in den Arbeitspunkt AP3′ übergehen. Würde anschließend nun die erste Reglerkaskade aus dem Wirkleistungs- und Gleichstromregler in Betrieb genommen, so würde die unerwünschte Wirkleistungsregelabweichung ΔP34 durch eine Veränderung des Gleichstromes um den Wert ΔId34 beseitigt und der Arbeitspunkt AP3′ in den eigentlich gewünschten Arbeitspunkt AP4 übergeführt werden. Auch in diesem Fall nehmen die Blindleistungsregelabweichung ΔQ34, welche die Ursache für den Arbeitspunktübergang darstellt, und die davon hervorgerufene Löschwinkelveränderung $\Delta\gamma34$ aufgrund des Stelleingriffes des unterlagerten Reglers Rq einen spitzen Winkel $\delta_{34}$ zueinander ein. So erfolgt auch hier im Normalfall bei gleichzeitigem Betrieb beider Kaskadenregelungen der Übergang von AP3 auf AP4 überschwingungsfrei und mit einer kleinen, vorübergehenden Wirkleistungsregelabweichung auf der Ortskurve OK34. So sind beliebige Arbeitspunktübergänge, z.B. aufgrund einer sprungartigen Veränderung des Wirk- bzw. Blindleistungssollwertes mit der bekannten Regelung von FIG 1 in dem in der FIG 2 dargestellten Ausschnitt des Kennlinienfeldes bei kleinen und mittleren Gleichrichtersteuerwinkeln bzw. Wechselrichterlöschwinkeln mit guter Dämpfung, und somit bei hoher Stabilität aller Regelkreise möglich.

Es hat sich jedoch gezeigt, daß die Stabilität einer solchen Regelung mit zunehmendem Gleichrichtersteuerwinkel bzw. Wechselrichterlöschwinkel abnimmt, und bei Winkelwerten zwischen ca. 60 und 70° eine Stabilitätsgrenze erreicht wird. In der FIG 2 ist hierzu beispielhaft eine "Stabilitätsgerade" SG eingetragen. Dies sei am Beispiel des in der FIG 3 dargestellten weiteren Ausschnittes eines der FIG 2 entsprechenden Kennlinienfeldes kurz erläutert. Diesem sind speziell die Arbeitspunkte für einen als Gleichrichter bzw. Wechselrichter betriebenen Umrichter einer HGÜ-Strecke zu entnehmen, welche bei mittleren und großen Gleichrichtersteuerwinkeln bzw. Wechselrichterlöschwinkeln auftreten.

In der FIG 3 sind die Übergänge von einem Arbeitspunkt AP5 auf AP6 bzw. von einem Arbeitspunkt AP7 auf AP8 beispielhaft dargestellt. So wandert der Arbeitspunkt des betroffenen Umrichters z.B. von AP5 nach AP6, wenn der Wirkleistungssollwert um ΔP56 verändert wird. Wird auch in diesem Fall angenommen, daß zunächst nur die erste Kaskadenregelung aus dem Wirkleistungs- und Gleichstromregler Rp und Ri in Betrieb ist, so verlagert sich der Arbeitspunkt AP5 aufgrund der sehr großen Änderung des Gleichstromistwertes ΔId56 in den Arbeitspunkt AP5′. Dieser Arbeitspunkt unterscheidet sich von dem eigentlichen gewünschten Arbeitspunkt AP6 in einer großen Blindleistungsregelabweichung ΔQ56. Man erkennt, daß zwischen der, den Arbeitspunktübergang verursachenden Änderung des Wirkleistungssollwertes ΔP56 und der daraufhin aufgrund des Stelleingriffes des unterlagerten Gleichstromreglers Ri verursachten Änderung des Gleichstromes in dem Bereich des Kennlinienfeldes der FIG 2 kein spitzer Winkel $\delta56$ mehr vorliegt. Aus diesem Grund wird der tatsächliche Übergang vom Arbeitspunkt AP5 auf AP6 bei gleichzeitigem Betrieb beider Reglerkaskaden bei erheblichem Überschwingen auf einer Ortskurve OK56 stattfinden. Bei Vorliegen eines derartigen Übergangsverhaltens ist aber in der Praxis nicht mehr damit zu rechnen, daß sich stabile Arbeitspunkte einstellen lassen. Vielmehr ist aufgrund der geringen Dämpfung in den Regelkreisen in diesem Bereich des Kennlinienfeldes mit einem ständigen Wandern des tatsächlichen Arbeitspunktes um den gewünschten Punkt herum zu rechnen, da bereits geringste Störungen auf der Strecke einen unverhältnismäßig großen Stelleingriff insbesondere des unterlagerten Gleichstromreglers Ri verursachen.

In sehr ähnlicher Weise erfolgt ein Übergang z.B. vom Arbeitspunkt AP7 auf einer Ortskurve OK78 in den Arbeitspunkt AP8 bei einer Änderung des Blindleistungssollwertes um ΔQ78. Auch in diesem Fall wird der Übergang insbesondere von einem erheblichen Überschwingen der die Veränderung verursachenden Blindleistungsregelgröße begleitet, da zwischen der Blindleistungsregelabweichung ΔQ78 und der bei alleinigem Betrieb der zweiten Reglerkaskade aus dem Blindleistungs- und Löschwinkelregler bestehenden Kaskadenregelung vom unterlagerten Löschwinkelregler RL verursachten Änderung im Löschwinkel um $\Delta\gamma78$ ein stumpfer Winkel $\delta78$ vorhanden ist. Die Praxis hat gezeigt, daß sich mit der bekannten Regelungsstruktur der FIG 1 etwa oberhalb einer in der FIG 3 beispielhaft eingetragenen Stabilitätsgeraden SG keine stabilen Arbeitspunkte mehr einstellen lassen. Vielmehr pendeln alle Regelgrößen mehr oder weniger stark ständig um die gewünschten Sollwerte.

Der Erfindung liegt die Aufgabe zugrunde, insbesondere ein Verfahren zur Regelung der Umrichter einer HGÜ-Strecke anzugeben, mit dem auch bei mittleren und großen Gleichrichtersteuerwinkeln bzw. Wechselrichterlöschwinkeln ein ausreichend gedämpfter, stabiler Betrieb der Strecke möglich ist. Desweiteren soll eine geeignete Regelvorrichtung zur Durchführung des erfindungsgemäßen Verfahrens angegeben werden.

Die Aufgabe wird gelöst durch die kennzeichnenden Merkmale von Anspruch 1. Vorteilhafte Vorrichtungen zur Durchführung des erfindungsgemäßen Verfahrens, und weitere Ausgestaltungen des Verfahrens und der Vorrichtungen sind in den Unteransprüchen angegeben.

Die Erfindung wird desweiteren anhand der Figuren 4 bis 9 näher erläutert werden.

Entsprechend dem erfindungsgemäßen Verfahren wird dem Ausgangssignal eines jeden der beiden übergeordneten Regler in der ersten und zweiten Kaskadenregelung eine Vorsteuergröße mit entsprechendem Vorzeichen aufgeschaltet, welche von der zum jeweils anderen der beiden übergeordneten Regler gehörigen Regelgröße abhängig ist. So wird dem Löschwinkelsollwert $\gamma^*$ am Ausgang des übergeordneten Spannungs- bzw. Blindleistungsreglers Rq der zweiten Kaskadenregelung in der FIG 1 eine von der Abweichung $\Delta P$ der Regelgröße P am Eingang des übergeordneten Wirkleistungsreglers Rq der ersten Kaskadenregelung abhängige erste Vorsteuergröße aufgeschaltet. Ist bei einer anderen Ausführungsform der Regelung z.B. kein unterlagerter Löschwinkelregler R1 vorhanden, so kann die erste Vorsteuergröße in diesem Fall direkt dem Wechselrichtersteuerwinkel $\alpha_{WR}$ aufgeschaltet werden. Entsprechend wird dem Gleichstromsollwert Id* am Ausgang des übergeordneten Wirkleistungsreglers Rp der ersten Kaskadenregelung eine von der Abweichung $\Delta U$ bzw. $\Delta Q$ der Regelgröße U bzw. Q am Eingang des übergeordneten Spannungs- bzw. Blindleistungsreglers Rq der zweiten Kaskadenregelung abhängige zweite Vorsteuergröße aufgeschaltet. Die zu den beiden Vorsteuergrößen gehörigen "Verstärkungsfaktoren" berücksichtigen dabei gemäß dem erfinderischen Verfahren die Arbeitspunktabhängigkeit des gewünschten, vorsteuernden Einflusses der Regelabweichung des einen der übergeordneten Regler auf das Stellsignal des anderen der übergeordneten Regler. So wird entsprechend den durch die Kennlinienfelder der FIG 2 und 3 vorgegebenen Abhängigkeiten zwischen den Parametern Wirkleistung P, Blindleistung Q, Gleichstrom Id und Gleichrichtersteuerwinkel $\alpha_{GR}$ bzw. Wechselrichterlöschwinkel $\gamma_{WR}$ das Stellsignal jedes der beiden übergeordneten Regler mittels der entsprechenden Vorsteuergröße über die Regelabweichung des "anderen" der beiden Regler im Sinne einer Entkopplung der beiden Kaskadenregelungen vorsteuert.

So ergibt sich die erste Vorsteuergröße aus der Bewertung einer aktuell vorliegenden Wirkleistungsregelabweichung $\Delta P$ mit einem ersten Verstärkungsfaktor. Dessen Wert entspricht der den Kurvenscharen der FIG 2 und 3 zu entnehmenden, im jeweiligen Arbeitspunkt der Regelung vor Eintritt der Wirkleistungsänderung vorliegenden Änderungsgeschwindigkeit des Wechselrichtersteuerwinkels bzw. Wechselrichterlöschwinkels gegenüber der Wirkleistung. Es läßt sich zeigen, daß zur Erzeugung eines geeigneten Regelsinnes die durch Bewertung einer Wirkleistungsregelabweichung mit einem derartigen, arbeitspunktabhängigen Verstärkungsfaktor gebildete erste Vorsteuergröße mit negativem Vorzeichen dem Ausgangssignal des Reglers Rq aufzuschalten ist. Mit einer solchen Vorsteuerung der Stellgröße des als Wechselrichter betriebenen Umrichter UR2 läßt sich insbesondere bei einer sprungartigen Änderung der Wirkleistungsregelabweichung $\Delta P$ besonders vorteilhaft erreicht, daß die aufgrund der Verkopplung der beiden kaskadenregelungen über die Regelstrecke und der Gradienten der Umrichter-Kennlinien im jeweiligen Arbeitspunkt zu erwartende, unerwünschte Abweichung in der "anderen" Regelgröße Q der zweiten Kaskadenregelung über die Stellgröße des dazugehörigen Blindleistungsreglers direkt voreingestellt wird. Hierdurch wird das von der gewünschten Wirkleistungsänderung an sich unerwünscht hervorgerufene, und abhängig vom jeweiligen Arbeitspunkt durch die Regelstrecke selbst und die Dynamik des Blindleistungsreglers u.U. erheblich verzögerte Auftreten einer Blindleistungsregelabweichung so "vorweggenommen", daß sich auch bei ungünstigen Arbeitspunkten der Regelung insbesondere bei mittleren und großen Gleichrichtersteuerwinkeln bzw. Wechselrichterlöschwinkeln noch stabile Arbeitspunkte einstellen lassen.Desweiteren paßt sich der Grad des jeweiligen Eingriffes der ersten Vorsteuergröße aufgrund der erfindungsgemäßen Arbeitspunktabhängigkeit des dazugehörigen Verstärkungsfaktors selbst an die jeweils vorliegenden Verhältnisse an. Dies sei am Beispiel der FIG 2 und 3 kurz erläutert.

Hierzu sei zunächst angenommen, daß die HGÜ-Strecke stationär auf den Arbeitspunkt AP1 eingeschwungen ist. Dieser ist in dem in der FIG 2 dargestellten Ausschnitt des Kennlinienfeldes bei dem relativ kleinen Gleichrichtersteuerwinkel $\alpha_{GR}$ bzw. Wechselrichterlöschwinkel $\gamma_{WR}$ von ca. 20 % zu finden. Wird hiervon ausgehend die Wirkleistungsregelgröße P des übergeordneten Reglers Rp um $\Delta P12$ verändert, so ist, wie bereits erläutert,unter der Annahme des alleinigen Eingriffes der ersten Kaskadenregelung theoretisch damit zu rechnen, daß die relativ kleine unerwünschte Blindleistungsregelabweichung $\Delta Q12$ auftritt. Eine solche ist aber insbesondere mittels der zweiten Kaskadenregelung über eine Löschwinkelveränderung um $\Delta \gamma12$ relativ leicht auszugleichen. Wie ebenfalls bereits ausgeführt wurde, sind die in diesem Bereich des Kennlinienfeldes befindlichen Arbeitspunkte relativ stabil und die beiden Kaskadenregelungen über die HGÜ-Strecke folglich nur geringfügig miteinander verkoppelt, so daß bei Arbeitspunktübergängen die unterstützende Wirkung der ersten Vorsteuergröße hier an sich nicht benötigt wird. Dementsprechend ist auch gemäß der vorliegenden Erfindung der Eingriff der ersten Vorsteuergröße auf das Stellsignal des übergeordneten Reglers der zweiten Kaskadenregelung klein, da auch die den Verstärkungsfaktor der ersten Vorsteuergröße bestimmende Änderungsgeschwindigkeit des Wechselrichtersteuerwinkels bzw. Wechselrichterlöschwinkels gegenüber der Wirkungsleistung in diesem Bereich des Kennlinienfeldes klein ist.

Es ist nun ein besonderer Vorteil des erfindungsgemäßen Verfahrens, daß direkt mit der Zunahme des Steuerwinkels und somit auch direkt mit der Zunahme der an sich unerwünschten Verkopplungen der beiden Kaskadenregelungen auch der Grad des Eingriffes der ersten Vorsteuergröße aufgrund der Arbeitspunktabhängigkeit des dazugehörigen Verstärkungsfaktors zunimmt. Bei einem Vergleich der Lage des Arbeitspunktes AP1 in FIG 2 mit der Lage des Arbeitspunkte AP5 bei einem Wechselrichterlöschwinkel von ca. 75° in der FIG 3 ist zu erkennen, daß in AP5 die Änderungsgeschwindigkeit des Wechselrichterlöschwinkels gegenüber der Wirkleistung wesentlich größer ist als in AP2. Bei einer Wirkleistungsänderung von z.B. $\Delta P56$ wird somit die erste Vorsteuergröße das Stellsignal des Blindleistungsreglers Rq erheblich stärker vorsteuern. Dies ist aber gerade in diesem Bereich des Kennlinienfeldes ganz besonders notwendig, da, wie bereits erläutert, eine Wirkleistungsänderung $\Delta P56$ bei alleinigem Betrieb der ersten Kaskadenregelung theoretisch die sehr große, unerwünschte Blindleistungsregelabweichung $\Delta Q56$ erzeugen würde.

In sehr ähnlicher Weise läßt sich die Wirkung der zweiten Vorsteuergröße erläutern. Diese ergibt sich erfindungsgemäß aus der Bewertung einer aktuell vorliegenden Spannungs- bzw. Blindleistungsregelabweichung $\Delta U/\Delta Q$ mit einem zweiten Verstärkungsfaktor. Dessen Wert entspricht der den Kurvenscharen der FIG 2 und 3 zu entnehmenden, im jeweiligen Arbeitspunkt der Regelung vor Eintritt der Regelgrößenänderung vorliegenden Änderungsgeschwindigkeit des HGÜ-Gleichstromes gegenüber der Blindleistung. In diesem Fall muß zur Erzeugung eines geeigneten Regelsinnes die durch Bewertung einer Blindleistungsregelabweichung mit einem derartigen, arbeitspunktabhängigen Verstärkungsfaktor gebildete zweite Vorsteuergröße mit positivem Vorzeichen auf das Ausgangssignal des Reglers Rp aufgeschaltet werden. Das erfindungsgemäße Verfahren ermöglicht somit durch eine geeignete Vorsteuerung der Stellgrößen der einzelnen Umrichter der HGÜ-Strecke eine solche Entkopplung der dazugehörigen Kaskadenregelungen, daß hierdurch jeder beliebige, auch oberhalb der bisherigen "Stabilitätsgeraden" SG liegende Arbeitspunkt in den beiden in der FIG 2 und 3 dargestellten Ausschnitten des Kennlinienfeldes einer HGÜ-Regelung stabil eingestellt werden kann.

Anhand der weiteren Figuren 4 bis 8 werden im folgenden vorteilhafte Vorrichtungen zur Durchführung des erfindungsgemäßen Verfahrens erläutert. So ist gemäß der Schaltung von FIG 4 der Eingang des übergeordneten Wirkleistungsreglers Rp mit dem Ausgang des übergeordneten Blindleistungsreglers Rq über einen ersten Kennliniengeber KG1, und der Eingang des übergeordneten Blindleistungsreglers Rq mit dem Ausgang des übergeordneten Wirkleistungsreglers Rp über einen zweiten Kennliniengeber KG2 verkoppelt. Die erste Vorsteuergröße am Ausgang von KG1 ist dabei mit $\Delta \alpha_{WR}$ bezeichnet und wird dem am Ausgang des Blindleistungsreglers Rq gebildeten Löschwinkelsollwert $\gamma^*$ bzw. Wechselrichtersteuerwinkel $\alpha_{WR}$ insbesondere über eine Mischungsstelle 6 mit negativem Vorzeichen aufgeschaltet. Entsprechend ist die zweite Vorsteuergröße am Ausgang von KG 2 mit $\Delta IdV$ bezeichnet und wird dem Gleichstromsollwert Id* am Ausgang des Wirkleistungsreglers Rp insbesondere über eine Mischungsstelle 5 mit positivem Vorzeichen aufgeschaltet.

Eine Arbeitspunktänderung $\Delta AP1$, z.B. hervorgerufen durch eine sprungartige Änderung des Wirkleistungssollwertes P*, wird in der Ausführungsform der FIG 4 durch Bewerten der Wirkleistungsregelabweichung $\Delta P$ mit dem im ersten Kennliniengebers KG1 hinterlegten ersten, arbeitspunktabhängigen Verstärkungsfaktor zur ersten Vorsteuergröße $\Delta \alpha_{WR}$ verarbeitet. Der Kennliniengeber bildet dabei den Verstärkungsfaktor in Form der auf das Produkt aus der ideellen Leerlaufgleichspannung Udi und dem Gleichstrom Id bezogenen Sinusfunktion des Lastwinkels $\phi$ zwischen der Spannung und dem Strom in bevorzugt demjenigen Netz nach, in dem die Wirkleistung P geregelt werden soll. In einer weiteren vorteilhaften Ausführungsform können für die ideelle Leerlaufgleichspannung und den Gleichstrom Konstanten, angenommen werden, deren Werte bevorzugt in der Mitte des Arbeitsbereiches insbesondere in der Nähe des Nennbetriebspunktes liegen. Der Grad des Eingriffs der ersten Vorsteuergröße ist somit im wesentlichen von der Sinusfunktion des Lastwinkels abhängig. Wie z.B. aus den in der FIG 2 und 3 dargestellten Ausschnitten des Kennlinienfeldes für einen Umrichter in der HGÜ-Strecke zu entnehmen ist, nimmt diese Funktion bei einer Änderung des Gleichrichtersteuer- bzw. Wechselrichterlöschwinkels vom kleinsten Wert bei ca. 5° bis zum größen Wert bei ca. 80° von einem Wert geringfügig größer 0 bis zu einem Wert geringfügig kleiner als 1 zu. Ein auf diese Weise gemäß der vorliegenden Erfindung gebildeter erster Verstärkungsfaktor ermöglicht es somit in besonders vorteilhafter Weise, daß die erste Vorsteuergröße $\Delta\alpha_{WR}$ bei kleinen Wechselrichtersteuerwinkeln nahezu unwirksam ist, und ihren vollen Eingriff gerade bei oberhalb der Stabilitätsgerade SG liegenden Arbeitspunkten bei mittleren und großen Wechselrichtersteuerwinkeln erreicht. In einer weiteren vorteilhaften Ausführungsform der Erfindung ist es möglich, den bisher als konstant angenommenen Gleichstrom Id auf der HGÜ-Strecke dem tatsächlich vorhandenen Istwert nachzuführen. Auf diese Weise wird eine noch feinere Anpassung des ersten Verstärkungsfaktors im ersten Kennliniengeber KG1 an den tatsächlich vorliegenden Arbeitspunkt im Kennlinienfeld der FIG 2 bzw. 3 erreicht.

In entsprechender Weise wird eine Arbeitspunktänderung $\Delta$ AP2, welche z.B. durch eine sprungartige Änderung des Blindleistungssollwertes Q* hervorgerufen wird, durch Bewerten der Blindleistungsregelabweichung $\Delta Q$ am Eingang des Blindleistungsreglers Rq über den zweiten Kennliniengeber KG2 zur zweiten Vorsteuergröße $\Delta IdV$ für das Stellsignal des Wirkleistungsreglers Rp verarbeitet. Der über den zweiten Kennliniengeber bereitgestellte arbeitspunktabhängige Verstärkungsfaktor für die zweite Vorsteuergröße wird dabei durch die auf die ideelle Leerlaufgleichspannung Udi bezogenen Sinusfunktion des Lastwinkels $\phi$ zwischen der Spannung und dem Strom in bevorzugt dem Netz nachgebildet, in dem die Blindleistung geregelt werden soll. Auch hierbei ist es vorteilhaft, in einer weiteren Ausführungsform für die ideelle Leerlaufgleichspannung einen bevorzugt in der Mitte des Arbeitsbereiches, insbesondere beim Nennbetriebspunkt liegenden konstanten Wert vorzugeben. Somit ist auch die zweite Vorsteuergröße im wesentlichen von der Sinusfunktion des Lastwinkels abhängig und erreicht den größtmöglichen Grad des Eingriffes bei mittleren und großen Wechselrichterlöschwinkeln.

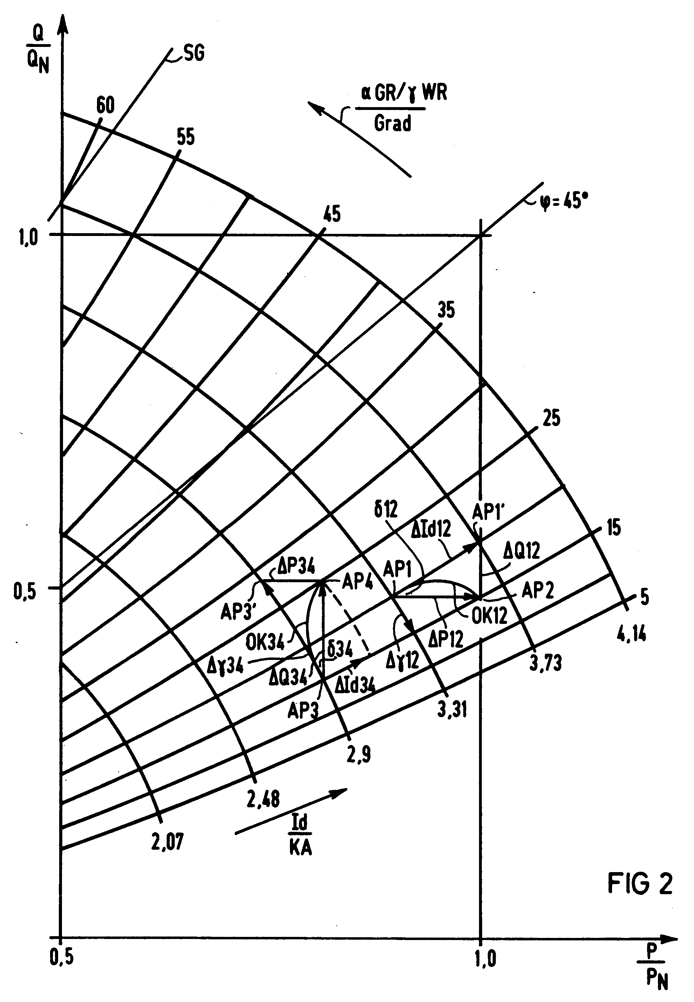

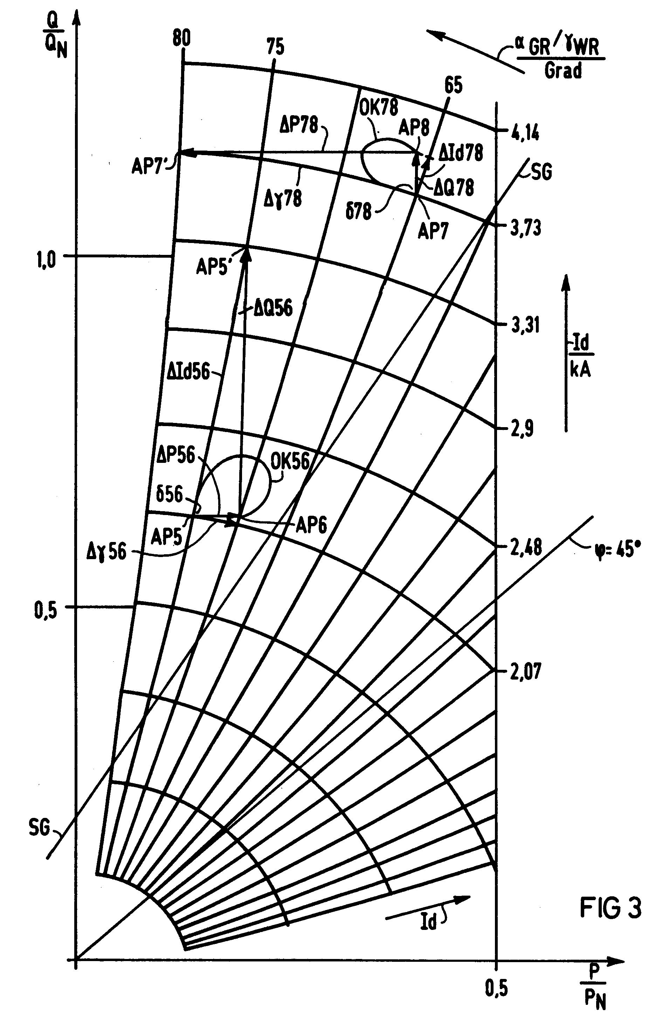

In der FIG 5 ist eine weitere vorteilhafte Ausführungsform der erfindungsgemäßen Regelungsschaltung der FIG 4 dargestellt. Dabei werden die Arbeitspunktänderungen $\Delta AP1/\Delta AP2$ nicht wie bisher durch Auswerten der entsprechenden Regelabweichung am Eingang des dazugehörigen übergeordneten Reglers detektiert. Vielmehr werden die Ausgangssignale Id* bzw. $\gamma$*/ $\alpha_{WR}$ der jeweiligen übergeordneten Regler über zusätzliche Kennliniengeber DVZ1 bzw. DVZ2 mit differenzierend, verzögerndem Übertragungsverhalten ("D-$T_1$"-Glied) geführt, und als Eingangsgrößen dem jeweiligen Kennliniengeber KG1 bzw. KG2 zur Verfügung gestellt. Da die übergeordneten Regler Rp und Rq in der Regel ein proportionalintegrierendes Übertragungsverhalten haben ("PI-Regler") wird deren Übertragungsverhalten durch das jeweils nachgeschaltete D-$T_1$-Glied nahezu kompensiert. Dem jeweiligen Kennliniengeber wird somit ein der jeweiligen Regelabweichung nahezu entsprechendes Eingangssignal zugeführt. Diese Ausführungsform der Erfindung hat aber den besonderen Vorteil, daß die Regelgröße am Eingang eines der übergeordneten Regler nicht direkt über den dazugehörigen Kennliniengeber auf das Stellsignal des anderen der übergeordneten Regler einwirkt. Vielmehr ist hierbei das "dämpfende" Übertragungsverhalten des jeweiligen übergeordneten Reglers Rp bzw. Rq dazwischengeschaltet. Insbesondere durch eine geeignete Auswahl der Verstärkungsfaktoren für die zusätzlichen Kennliniengeber DVZ1 und DVZ2 können auf diese Weise besonders vorteilhaft sich über die HGÜ-Strecke schließende, zusätzliche und unter Umständen relativ ungedämpfte Regelschleifen vermieden werden.

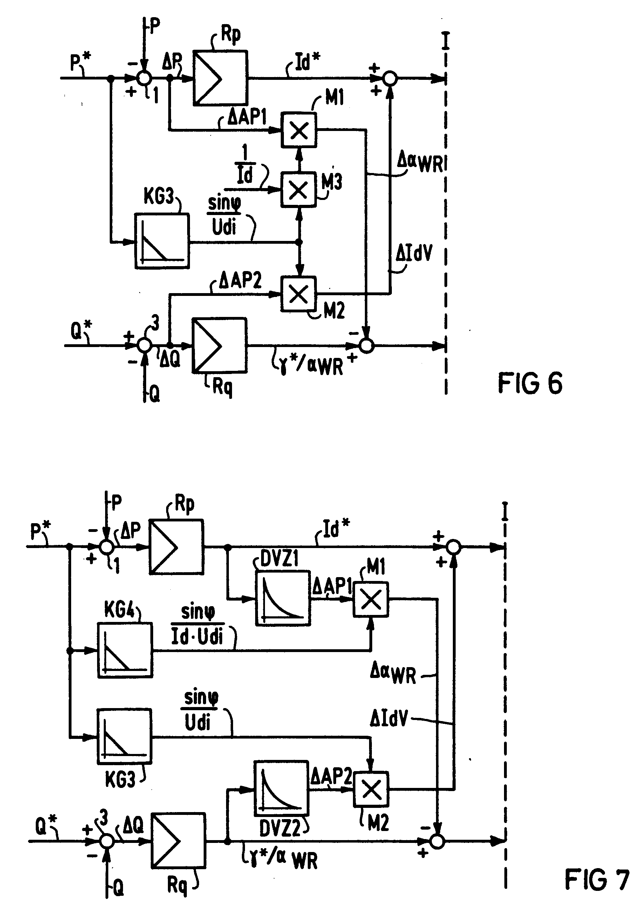

In der FIG 6 ist eine weitere vorteilhafte Ausführungsform der erfindungsgemäßen Vorrichtung dargestellt. Dabei wird der als ein Verstärkungsfaktor dienende Quotient aus der Sinusfunktion des Lastwinkels und der ideellen Leerlaufspannung Udi in einem weiteren Kennliniengeber KG3 in Abhängigkeit des Wirkleistungssollwertes P* in Form einer fallenden, geradenförmigen Kennlinie angenähert. Diese Ausführungsform hat den besonderen Vorteil, daß der Istwert des Lastwinkels nicht gesondert erfaßt werden muß. Die erste Vorsteuergröße $\Delta\alpha_{WR}$ ergibt sich in diesem Fall somit durch Multiplikation des Ausgangssignales des Kennliniengebers KG3 mit der über die Wirkleistungsänderung $\Delta P$ detektierten Arbeitspunktänderung $\Delta AP1$ und mit dem Kehrwert des HGÜ-Gleichstromes Id mittels zweier Multiplizierer M1 und M3. In sehr ähnlicher Weise ergibt sich die zweite Vorsteuergröße $\Delta IdV$ durch Multiplikation des Ausgangssignales des Kennliniengebers KG3 mit einer über die Blindleistungsänderung $\Delta Q$ detektierten Arbeitspunktänderung $\Delta AP2$ mittels eines weiteren Multiplizierers M2. Selbstverständlich können auch bei der in der FIG 6 dargestellten Ausführungsform die Arbeitspunktänderungen $\Delta AP1$ und $\Delta AP2$ entsprechend der Schaltung von FIG 5 über zusätzliche D-$T_1$-Elemente DVZ1 und DVZ2 an den Ausgängen der übergeordneten Regler abgegriffen werden.

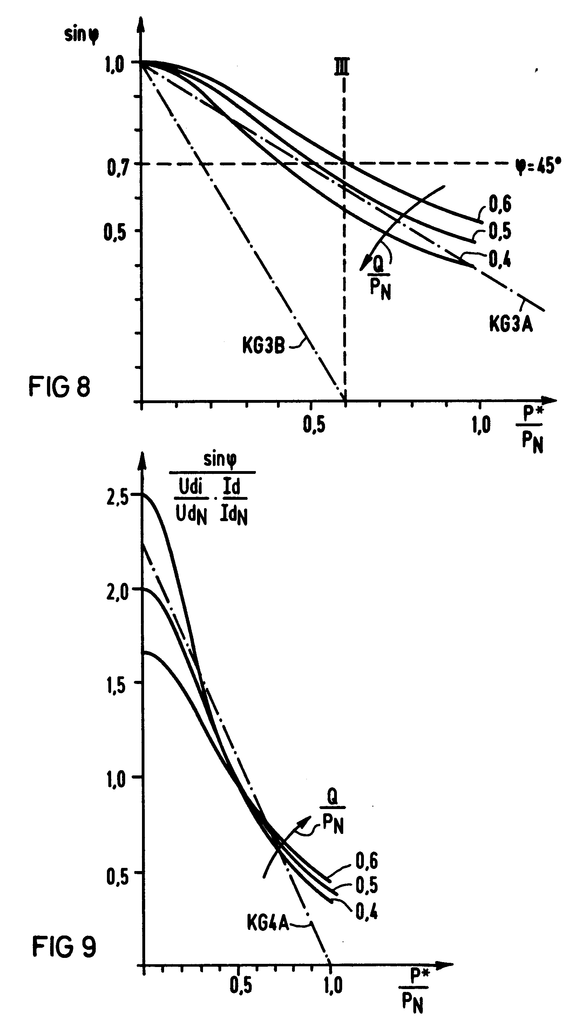

Anhand der FIG 8 wird desweiteren kurz erläutert, wie die Geradenkennlinie mit negativer Steigung im Kennliniengeber KG3 auf besonders vorteilhafte Weise gebildet werden kann. Hierzu ist in der FIG 8 der Verlauf der Sinusfunktion des Lastwinkels $\phi$ gegenüber dem auf den Nennwert $P_N$ bezogenen Wirkleistungssollwert P* für mehrere ebenfalls auf den Wirkleistungsnennwert bezogene Werte der Blindleistung Q dargestellt. Da in der Praxis HGÜÜbertragungsstrecken bevorzugt mit einem bezogenen Blindleistungswert von ca. 50 % betrieben werden, sind in der FIG 8 speziell drei Verläufe von $\sin\phi$ für $Q/P_N$ = 0,4 bzw. 0,5 und 0,6 dargestellt. In einer möglichen Ausführungsform kann die Sinusfunktion des Lastwinkels durch die in der FIG 8 strichpunktiert eingetragene, mit KG3A bezeichnete Gerade angenähert werden. Wie bereits anhand der FIG 2 und 3 näher erläutert wurde, wird der Eingriff der Vorsteuergrößen zur Entkoppelung der Kaskadenregelungen insbesondere bei mittleren und großen Wechselrichterlöschwinkeln benötigt, d.h. bei Lastwinkeln $\phi$ mit einem Wert von größer 45°. Aus diesem Grund kann in der Praxis das Gefälle der den $\sin\phi$ annähernden Geraden u.U. auch größer gewählt werden. In der FIG 8 ist eine derartige Gerade strichpunktiert eingezeichnet und mit KG3B bezeichnet. Diese Gerade ist so ausgelegt, daß die Vorsteuergrößen $\Delta\alpha_{WR}$ und $\Delta IdV$ bei Arbeitspunkten, welche einen bezogenen Blindleistungswert von ca. 50 % und einen Lastwinkel von größer als 45° haben, also rechts der in der FIG 8 strichliert eingetragenen senkrechten Abtrennungslinie III liegen, nicht mehr im Eingriff sind.

In der FIG 7 ist schließlich eine weitere vorteilhafte Ausführungsform der erfindungsgemäßen Vorrichtung dargestellt. Dabei werden wiederum die Arbeitspunktänderungen $\Delta AP1$ und $\Delta AP2$ entsprechend der Schaltung von FIG 5 durch Auswertung der Reglerausgangsgrößen über die zusätzliche Kennliniengeber DVZ1 und DVZ2 erfaßt und zur Bildung der jeweiligen Vorsteuergröße gemäß der Darstellung von FIG 6 einem ersten bzw. zweiten Multiplizierer M1 bzw. M2 zugeführt. In der Ausführungsform der FIG 7 werden die zur Bildung der Vorsteuergrößen notwendigen arbeitspunktabhängigen Verstärkungsfaktoren besonders vorteilhaft in zwei Kennliniengebern KG3 und KG4 abhängig vom Wirkleistungssollwert P* getrennt in Form zweier Geradenkennlinien mit insbesondere unterschiedlichen negativen Steigungen simuliert. Dabei nähert der Kennliniengeber KG3 in Anlehnung an den Kennliniengeber KG2 und entsprechend dem Kennliniengeber KG3 der Schaltung von FIG 6 die auf die ideelle Leerlaufgleichspannung Udi bezogene Sinusfunktion des Lastwinkels an. Der Kennliniengeber KG4 simuliert in Anlehnung an den Kennliniengeber KG1 der Schaltungen in FIG 4 bzw. FIG 5 die auf das Produkt aus der ideellen Leerlaufgleichspannung dem Gleichstrom auf der HGÜ-Strecke bezogene Sinusfunktion des Lastwinkels.

In der FIG 9 ist Quotient $\sin\phi/Udi*Id$ wiederum für die drei auf den Nennarbeitspunkt $P_N$ bezogenen Blindleistungswerte $Q$ = 0,4 bzw. 0,5 und 0,6 dargestellt. Zur besseren Übersicht wurde dabei die ideelle Leerlaufgleichspannung Udi und der HGÜ-Gleichstrom Id auf den jeweiligen Nennbetriebswert $Ud_N$ bzw. $Id_N$ bezogen. Eine besonders vorteilhafte "fallende" Geradenkennlinie für den Kennliniengeber KG4 ist dabei in der FIG 9 strichpunktiert dargestellt und mit KG4A bezeichnet. Die gewünschte Entkopplung der beiden Kaskadenregelungen wird mit Hilfe der erfindungsgemäßen Schaltung von FIG 7 in besonders vorteilhafter Weise dann erreicht, wenn für den Kennliniengeber KG3 eine fallende Kennlinie mit einer der Kennlinie KG3A der FIG 8 annähernd entsprechenden negativen Steigung, und für den Kennliniengeber KG4 eine fallende Kennlinie mit einer der Kennlinie KG4A der FIG 8 annähernd entsprechenden negativen Steigung ausgewählt wird.

## Patentansprüche

1. Verfahren zur Regelung der Wirk- und Blindleistungsübertragung zwischen zwei elektrischen Netzen, welche über eine insbesondere als Kurzkupplung ausgeführte Hochspannungs-Gleichstrom-Übertragungsstrecke ("HGÜ"-Strecke) verbunden sind, wobei jedes Netz über einen steuerbaren Umrichter an die HGÜ-Strecke angekoppelt ist, einer der Umrichter als Gleichrichter und der andere als Wechselrichter betrieben wird, die Steuerwinkelstellgröße für den Steuersatz des als Gleichrichter betriebenen Umrichters vorgegeben wird von einem unterlagerten Stromregler für den Gleichstrom in der HGÜ-Strecke, der Sollwert für den Stromregler vorgegeben wird von einem übergeordneten Leistungsregler für die Wirkleistung in einem der Netze, und die Steuerwinkelstellgröße für den Steuersatz des als Wechselrichter betriebenen Umrichters vorgegeben wird von einem übergeordneten Regler für die Spannung oder die Blindleistung in einem der Netze, **dadurch gekennzeichnet,** daß dem Ausgangssignal des übergeordneten Spannungs- oder Blindleistungsreglers (Rq) eine erste Vorsteuergröße ($\Delta\alpha_{WR}$) mit negativem Vorzeichen aufgeschaltet wird, welche im jeweiligen Arbeitspunkt von der Änderungsgeschwindigkeit des Steuerwinkels ($\alpha_{WR}$) für den als Wechselrichter betriebenen Umrichter (UR2) gegenüber einer Änderung der Wirkleistung und von einer aktuellen Wirkleistungsregelabweichung ($\Delta P$) abhängig ist, und dem Ausgangssignal (Id*) des übergeordneten Wirkleistungsreglers (Rp) eine weitere Vorsteuergröße ($\Delta IdV$) aufgeschaltet wird, welche im jeweiligen Arbeitspunkt von der Änderungsgeschwindigkeit des Gleichstromistwertes (Id) gegenüber einer Änderung der Spannung oder Blindleistung und von einer aktuellen Spannungs-oder Blindleistungsregelabweichung ($\Delta U/\Delta Q$) abhängig ist.

**2.** Verfahren nach Anspruch 1, **dadurch gekennzeichnet,** daß die Steuerwinkelstellgröße ($\alpha_{WR}$) für den als Wechselrichter betriebenen Umrichter (UR2) von einem unterlagerten Löschwinkelregler (R1), und der dazugehörige Löschwinkelsollwert ($\gamma^*$) von dem übergeordneten Spannungs- oder Blindleistungsregler (Rq) vorgegeben wird.

**3.** Vorrichtung zur Regelung der Wirk- und Blindleistungsübertragung zwischen zwei elektrischen Netzen (A,B), welche über eine Hochspannungs-Gleichstrom-Übertragungsstrecke ("HGÜ"-Strecke) verbunden sind, wobei jedes Netz über einen steuerbaren Umrichter (UR1,UR2) an die HGÜ-Strecke angekoppelt ist, einer der Umrichter als Gleichrichter und der andere als Wechselrichter betrieben wird, mit

    a) einem unterlagerten Stromregler (Ri) für den Gleichstrom in der HGÜ-Strecke, welcher die Steuerwinkelstellgröße ($\alpha_{GR}$) für den Steuersatz des als Gleichrichter betriebenen Umrichters (UR1) vorgibt,

    b) einem übergeordneten Leistungsregler (Rp) für die Wirkleistung in einem der Netze, welcher den Sollwert für den unterlagerten Stromregler vorgibt,

    c) einem übergeordneten Regler (Rq) für die Spannung oder die Blindleistung in einem der Netze, welcher die Steuerwinkelstellgröße ($\alpha_{WR}$) für den Steuersatz des als Wechselrichter betriebenen Umrichters (UR2) vorgibt,

    **gekennzeichnet** durch

    d) einen ersten Kennliniengeber (KG1), welcher die Regelabweichung ($\Delta P$) am Eingang des übergeordneten Wirkleistungsreglers (Rp) mit der auf das Produkt (Udi*Id) aus der ideellen Leerlaufgleichspannung und dem Gleichstrom bezogenen Sinusfunktion des Phasenverschiebungswinkels zwischen der Spannung und dem Strom in einem der Netze ($\sin\phi$) bewertet und dem Ausgangssignal des übergeordneten Spannungs- oder Blindleistungsreglers (Rq) als eine erste Vorsteuergröße ($\Delta\alpha_{WR}$) mit negativem Vorzeichen aufschaltet, und

    e) einen zweiten Kennliniengeber (KG2), welcher die Regelabweichung ($\Delta Q$) am Eingang des übergeordneten Spannungs- oder Blindleistungsreglers (Rq) mit der auf die ideelle Leerlaufgleichspannung (Udi) bezogenen Sinusfunktion des Phasenverschiebungswinkels zwischen der Spannung und dem Strom in einem der Netze ($\sin\phi$) bewertet und dem Ausgangssignal (Id*) des übergeordneten Wirkleistungsreglers (Rp) als eine zweite Vorsteuergröße ($\Delta IdV$) aufschaltet (FIG 4).

**4.** Vorrichtung zur Regelung der Wirk- und Blindleistungsübertragung zwischen zwei elektrischen Netzen (A,B), welche über eine Hochspannungs-Gleichstrom-Übertragungsstrecke ("HGÜ"-Strecke) verbunden sind, wobei jedes Netz über einen steuerbaren Umrichter (UR1,UR2) an die HGÜ-Strecke angekoppelt ist, einer der Umrichter als Gleichrichter und der andere als Wechselrichter betrieben wird, mit

    a) einem unterlagerten Stromregler (Ri) für den Gleichstrom in der HGÜ-Strecke, welcher die Steuerwinkelstellgröße ($\alpha_{GR}$) für den Steuersatz des als Gleichrichter betriebenen Umrichters (UR1) vorgibt,

    b) einem übergeordneten Leistungsregler (Rp) für die Wirkleistung in einem der Netze, welcher den Sollwert für den unterlagerten Stromregler vorgibt,

    c) einem übergeordneten Regler (Rq) für die Spannung oder die Blindleistung in einem der Netze, welcher die Steuerwinkelstellgröße ($\alpha_{WR}$) für den Steuersatz des als Wechselrichter betriebenen Umrichters (UR2) vorgibt,

    **gekennzeichnet** durch

    d) einen dritten Kennliniengeber (KG3), welcher die auf die ideelle Leerlaufgleichspannung (Udi) bezogene Sinusfunktion des Phasenverschiebungswinkels zwischen der Spannung und dem Strom in einem der Netze ($\sin\phi$) abhängig vom Wirkleistungssollwert (P*) als Eingangsgröße in Form einer Geraden mit negativer Steigung annähert,

    e) einen dritten Multiplizierer (M3) für das Ausgangssignal des dritten Kennliniengebers (KG3) und den Kehrwert des Gleichstromes (Id) als Eingangsgrößen,

    f) einen ersten Multiplizierer (M1), welcher aus der Regelabweichung ($\Delta P$) am Eingang des übergeordneten Wirkleistungsreglers (Rp) und dem Ausgangssignal des dritten Multiplizierers (M3) als Eingangsgrößen eine erste Vorsteuergröße ($\Delta\alpha_{WR}$) bildet und dem Ausgangssignal des übergeordneten Spannungs- und Blindleistungsreglers (R1) mit negativem Vorzeichen aufschaltet, und

    g) einen zweiten Multiplizierer (M2), welcher aus der Regelabweichung ($\Delta Q$) am Eingang des übergeordneten Spannungs- oder Blindleistungsreglers (Rq) und dem Ausgangssignal des dritten Kennliniengebers (KG3) als Eingangsgrößen eine zweite Vorsteuergröße ($\Delta IdV$) bildet und dem Aus-

gangssignal des übergeordneten Wirkleistungsreglers (Rp) aufschaltet (FIG 6).

5. Vorrichtung zur Regelung der Wirk- und Blindleistungsübertragung zwischen zwei elektrischen Netzen (A,B), welche über eine Hochspannungs-Gleichstrom-Übertragungsstrecke ("HGÜ"-Strecke) verbunden sind, wobei jedes Netz über einen steuerbaren Umrichter an die HGÜ-Strecke angekoppelt ist, einer der Umrichter als Gleichrichter und der andere als Wechselrichter betrieben wird, mit

a) einem unterlagerten Stromregler (Ri) für den Gleichstrom in der HGÜ-Strecke, welcher die Steuerwinkelstellgröße ($\alpha_{GR}$) für den Steuersatz des als Gleichrichter betriebenen Umrichters (UR1) vorgibt,

b) einem übergeordneten Leistungsregler (Rp) für die Wirkleistung in einem der Netze, welcher den Sollwert für den unterlagerten Stromregler vorgibt,

c) einem übergeordneten Regler (Rq) für die Spannung oder die Blindleistung in einem der Netze, welcher die Steuerwinkelstellgröße ($\alpha_{WR}$) für den Steuersatz des als Wechselrichter betriebenen Umrichters (UR2) vorgibt,

**gekennzeichnet** durch

d) einen dritten Kennliniengeber (KG3), welcher die auf die ideelle Leerlaufgleichspannung (Udi) bezogene Sinusfunktion des Phasenverschiebungswinkels zwischen der Spannung und dem Strom in einem der Netze (sin$\phi$) abhängig vom Wirkleistungssollwert (P*) als Eingangsgröße in Form einer Geraden mit negativer Steigung annähert,

e) einen vierten Kennliniengeber (KG4), welcher die auf das Produkt aus der ideellen Leerlaufgleichspannung und dem Gleichstrom (Udi*Id) bezogenen Sinusfunktion des Phasenverschiebungswinkels zwischen der Spannung und dem Strom in einem der Netze (sin$\phi$) abhängig vom Wirkleistungssollwert (P*) als Eingangsgröße in Form einer Geraden mit negativer Steigung annähert,

f) einen ersten Multiplizierer (M1), welcher aus der Regelabweichung ($\Delta$P) am Eingang des übergeordneten Wirkleistungsreglers (Rp) und dem Ausgangssignal des vierten Kennliniengebers (KG4) als Eingangsgrößen eine erste Vorsteuergröße ($\Delta\alpha_{WR}$) bildet und dem Ausgangssignal des übergeordneten Spannungs- und Blindleistungsreglers (R1) mit negativem Vorzeichen aufschaltet, und

g) einen zweiten Multiplizierer (M2), welcher

aus der Regelabweichung ($\Delta$Q) am Eingang des übergeordneten Spannungs- oder Blindleistungsreglers (Rq) und dem Ausgangssignal des dritten Kennliniengebers (KG3) als Eingangsgrößen eine zweite Vorsteuergröße ($\Delta$IdV) bildet und dem Ausgangssignals des übergeordneten Wirkleistungsreglers (Rq) aufschaltet (FIG 7).

6. Vorrichtung nach einem der Ansprüche 3 bis 5, **gekennzeichnet** durch einen unterlagerten Löschwinkelregler (R1), welcher die Steuerwinkelstellgröße ($\alpha_{WR}$) für den Steuersatz (St2) des als Wechselrichter betriebenen Umrichters (UR2) vorgibt, und der dazugehörige Sollwert ($\gamma^*$) vom übergeordneten Spannungs- oder Blindleistungsregler (Rq) vorgegeben wird.

7. Vorrichtung nach einem der Ansprüche 3 bis 6, **gekennzeichnet** durch je einen fünften und sechsten Kennliniengeber (DVZ1,DVZ2) mit differenzierend, verzögerndem Verhalten, welche jeweils das Ausgangssignal des übergeordneten Wirkleistungsreglers (Rp) und des Spannungs- oder Blindleistungsreglers (Rq) anstelle der Regelabweichungen am jeweiligen Reglereingang dem ersten und zweiten Kennliniengeber (KG1,KG2) bzw. dem ersten und zweiten Multiplizierer (M1,M2) als Eingangsgrößen zuführen (FIG 5,7).

**Claims**

1. Method for controlling the active and reactive power transmission between two electrical networks which are connected by a high-voltage d-c transmission line (HVDC line) constructed in particular as a short coupling, each network being coupled by way of a controllable converter to the HVDC line, with one of the converters being operated as a rectifier and the other as an inverter, the delay angle control variable for the control unit of the converter operated as a rectifier being given by a subordinated current controller for the d-c current in the HVDC line, the reference value for the current controller being given by a superimposed power controller for the active power in one of the networks, and the delay angle control variable for the control unit of the converter operated as an inverter being given by a superimposed controller for the voltage or the reactive power in one of the networks, **characterised in that,** to the output signal of the superimposed voltage or reactive power controller (Rq), there is added, with a negative sign, a first pilot control variable ($\Delta\alpha_{WR}$) which is dependent upon the rate of change of the

delay angle ($\alpha_{WR}$) for the converter (UR2) operated as an inverter relative to a change in the active power at the respective operating point and upon an actual active power control deviation ($\Delta P$), and, to the output signal (Id*) of the superimposed active power controller (Rp), there is added a further pilot control variable ($\Delta IdV$) which is dependent upon the rate of change of the instantaneous d-c current value (Id) relative to a change in the voltage or reactive power at the respective operating point and upon an actual voltage or reactive power control deviation ($\Delta U/\Delta Q$).

2. Method according to claim 1, **characterised in that** the delay angle control variable ($\alpha_{WR}$) for the converter (UR2) operated as an inverter is given by a subordinated extinction angle controller (R1), and the associated extinction angle reference value ($\gamma^*$) is given by the superimposed voltage or reactive power controller (Rq).

3. Apparatus for controlling the active and reactive power transmission between two electrical networks (A, B) which are connected by way of a high-voltage d-c transmission line (HVDC line), each network being coupled by way of a controllable converter (UR1,UR2) to the HVDC line, with one of the converters being operated as a rectifier and the other as an inverter, having

a) a subordinated current controller (Ri) for the d-c current in the HVDC line, which subordinated current controller gives the delay angle control variable ($\alpha_{GR}$) for the control unit of the converter (UR1) operated as a rectifier,

b) a superimposed power controller (Rp) for the active power in one of the networks, which superimposed power controller gives the reference value for the subordinated current controller,

c) a superimposed controller (Rq) for the voltage or the reactive power in one of the networks, which superimposed controller gives the delay angle control variable ($\alpha_{WR}$) for the control unit of the converter (UR2) operated as an inverter,

**characterised by**

d) a first characteristic generator (KG1) which weights the control deviation ($\Delta P$) at the input of the superimposed active power controller (Rp) with the sine function of the phase shift angle between the voltage and the current in one of the networks ($\sin\phi$), divided by the product (Udi*Id) of the ideal no-load d-c voltage and the d-c current, and adds it, with a negative sign, to the output signal of the superimposed voltage or reactive power controller (Rq) as a first pilot control variable ($\Delta\alpha_{WR}$), and

e) a second characteristic generator (KG2) which weights the control deviation ($\Delta Q$) at the input of the superimposed voltage or reactive power controller (Rq) with the sine function of the phase shift angle between the voltage and the current in one of the networks ($\sin\phi$), divided by the ideal no-load d-c voltage (Udi), and adds it to the output signal (Id*) of the superimposed active power controller (Rp) as a second pilot control variable ($\Delta IdV$) (Figure 4).

4. Apparatus for controlling the active and reactive power transmission between two electrical networks (A, B) which are connected by way of a high-voltage d-c transmission line (HVDC line), each network being coupled by way of a controllable converter (UR1, UR2) to the HVDC line, with one of the converters being operated as a rectifier and the other as an inverter, having

a) a subordinated current controller (Ri) for the d-c current in the HVDC line, which subordinated current controller gives the delay angle control variable ($\alpha_{GR}$) for the control unit of the converter (UR1) operated as a rectifier,

b) a superimposed power controller (Rp) for the active power in one of the networks, which superimposed power controller gives the reference value for the subordinated current controller,

c) a superimposed controller (Rq) for the voltage or the reactive power in one of the networks, which superimposed controller gives the delay angle control variable ($\alpha_{WR}$) for the control unit of the converter (UR2) operated as an inverter,

**characterised by**

d) a third characteristic generator (KG3) which approximates, in the form of a straight line with a negative slope, the sine function of the phase shift angle between the voltage and the current in one of the networks ($\sin\phi$), divided by the ideal no-load d-c voltage (Udi), in dependence upon the active power reference value (P*) as the input variable,

e) a third multiplier (M3) for the output signal of the third characteristic generator (KG3) and the reciprocal value of the d-c current (Id) as the input variables,

f) a first multiplier (M1) which, from the control deviation ($\Delta P$) at the input of the superimposed active power controller (Rp) and from the output signal of the third multiplier (M3) as the input variables, forms a first pilot control variable ($\Delta\alpha_{WR}$) and adds it to the output signal of the superimposed voltage and reactive power controller (R1) with a negative sign, and

g) a second multiplier (M2) which, from the control deviation ($\Delta Q$) at the input of the superimposed voltage or reactive power controller (Rq) and from the output signal of the third characteristic generator (KG3) as the input variables, forms a second pilot control variable ($\Delta IdV$) and adds it to the output signal of the superimposed active power controller (Rp) (Figure 6).

5. Apparatus for controlling the active and reactive power transmission between two electrical networks (A, B) which are connected by way of a high voltage d-c transmission line (HVDC line), each network being coupled by way of a controllable converter to the HVDC line, and one of the converters being operated as a rectifier and the other as an inverter, having

a) a subordinated current controller (Ri) for the d-c current in the HVDC line, which subordinated current controller gives the delay angle control variable ($\alpha_{GR}$) for the control unit of the converter (UR1) operated as a rectifier,

b) a superimposed power controller (Rp) for the active power in one of the networks, which superimposed power controller gives the reference value for the subordinated current controller,

c) a superimposed controller (Rq) for the voltage or the reactive power in one of the networks, which superimposed controller gives the delay angle control variable ($\alpha_{WR}$) for the control unit of the converter (UR2) operated as an inverter,

**characterised by**

d) a third characteristic generator (KG3) which approximates, in the form of a straight line with a negative slope, the sine function of the phase shift angle between the voltage and the current in one of the networks (sin$\phi$), divided by the ideal no-load d-c voltage (Udi), in dependence upon the active power reference value (P*) as the input variable,

e) a fourth characteristic generator (KG4) which approximates, in the form of a straight line with a negative slope, the sine function of the phase shift angle between the voltage and the current in one of the networks (sin$\phi$), divided by the product of the ideal no-load d-c voltage and the d-c current (Udi*Id), in dependence upon the active power reference value (P*) as the input variable,

f) a first multiplier (M1) which, from the control deviation ($\Delta P$) at the input of the superimposed active power controller (Rp) and from the output signal of the fourth characteristic generator (KG4) as the input variables, forms a first pilot control variable ($\Delta\alpha_{WR}$) and adds it to the output signal of the superimposed voltage and reactive power controller (R1) with a negative sign, and

g) a second multiplier (M2) which, from the control deviation ($\Delta Q$) at the input of the superimposed voltage or reactive power controller (Rq) and from the output signal of the third characteristic generator (KG3) as the input variables, forms a second pilot control variable ($\Delta IdV$) and adds it to the output signal of the superimposed active power controller (Rq) (Figure 7).

6. Apparatus according to one of claims 3 to 5, **characterised by** a subordinated extinction angle controller (R1) which gives the delay angle control variable ($\alpha_{WR}$) for the control unit (St2) of the converter (UR2) operated as an inverter, and the associated reference value ($\gamma$*) is given by the superimposed voltage or reactive power controller (Rq).

7. Apparatus according to one of claims 3 to 6, **characterised by** a respective fifth and sixth characteristic generator (DVZ1, DVZ2) having differentiating, delaying behaviour, which supply as the input variables to the first and second characteristic generator (KG1, KG2) and the first and second multiplier (M1, M2), the output signal of the superimposed active power controller (Rp) and the voltage or reactive power controller (Rq), respectively, instead of the control deviations at the respective controller input (Figures 5, 7).

**Revendications**

1. Procédé pour régler la transmission de la puissance active et de la puissance réactive entre deux réseaux électriques qui sont raccordés par l'intermédiaire d'une section de transmission à haute tension et à courant continu (section "HGÜ"), réalisée notamment sous la forme d'un couplage court, et selon lequel chaque réseau est accouplé par l'intermédiaire d'un mutateur commandable à la section HGÜ, l'un des mutateurs fonctionne en tant que redresseur et l'autre en tant qu'onduleur, la grandeur de réglage de l'angle de commande pour l'ensemble de l'unité de commande du mutateur fonctionnant en tant que redresseur est prédéterminée par un régulateur de courant subordonné servant à régler le courant continu dans la section HGÜ, la valeur de consigne pour le régulateur de courant est prédéterminée par un régulateur de puissance de rang supérieur servant à régler la puissance active dans l'un des réseaux, et la grandeur de réglage de l'angle de commande pour l'unité de commande du mutateur fonctionnant en tant qu'onduleur est prédéterminée par un régulateur de rang supérieur, qui sert à régler la tension ou la puissance réactive dans l'un des réseaux, caractérisé par le fait qu'au signal de sortie du régulateur de rang supérieur (Rq) de la tension ou de la puissance réactive est ajoutée une première grandeur de commande pilote ($\Delta\alpha_{WR}$) possédant un signe négatif et qui dépend, au point de fonctionnement respectif, de la vitesse de variation de l'angle decommande ($\alpha_{WR}$) pour le mutateur (UR2) fonctionnant en tant qu'onduleur, par rapport à une variation de la puissance active, et d'un écart actuel ($\Delta p$) de régulation de la puissance active, et qu'au signal de sortie (Id*) du régulateur de rang supérieur (Rp) de la puissance réactive est ajoutée une autre grandeur de commande pilote ($\Delta IdV$), qui, au point de fonctionnement concerné, dépend de la vitesse de modification de la valeur réelle (Id) du courant continu par rapport à une variation de la tension ou de la puissance réactive, et d'un écart actuel de réglage ($\Delta U/\Delta Q$) de la tension ou de la puissance réactive.

2. Procédé suivant la revendication 1, caractérisé par le fait que la grandeur de réglage de l'angle de commande ($\alpha_{WR}$) pour le mutateur (UR2) fonctionnant en tant qu'onduleur est prédéterminée par un régulateur subordonné de l'angle d'extinction (R1) et que la valeur de consigne de l'angle d'extinction ($\gamma^*$) associé est prédéterminée par le régulateur de rang supérieur (Rq) de la tension ou de la puissance réactive.

3. Dispositif pour régler la transmission de puissance active et de puissance réactive entre deux réseaux électriques (A,B), qui sont raccordés par l'intermédiaire d'une section de transmission à haute tension et à courant continu (section "HGÜ"), et dans lequel chaque réseau est accouplé à la section HGÜ par l'intermédiaire d'un mutateur commandable (UR1,UR2), et l'un des mutateurs fonctionne en tant que redresseur et l'autre en tant qu'onduleur, et comportant

a) un régulateur de courant subordonné (Ri) servant à régler le courant dans la section HGÜ et qui prédétermine la grandeur de réglage de l'angle de commande ($\alpha_{GR}$) pour l'unité de commande du mutateur (UR1) fonctionnant en tant que redresseur,

b) un régulateur de puissance de rang supérieur (Rp) servant à régler la puissance active dans l'un des réseaux et qui prédétermine la valeur de consigne pour le régulateur de courant subordonné,

c) un régulateur de rang supérieur (Rq) pour la tension ou la puissance réactive dans l'un des réseaux et qui prédétermine la grandeur de réglage de l'angle de commande ($\alpha_{WR}$) pour l'unité de commande du mutateur (UR2) fonctionnant en tant qu'onduleur, caractérisé par

d) un premier générateur de courbes caractéristiques (KG1), qui évalue l'écart de réglage ($\Delta p$) à l'entrée du régulateur de rang supérieur (Rp) de la puissance réactive avec la fonction sinusoïdale, rapportée au produit (Udi*Id) de la tension continue idéale à vide par le courant continu, de l'angle de déphasage entre la tension et le courant dans l'un des réseaux ($\sin\phi$) et ajoute cet écart de réglage au signal de sortie du régulateur de rang supérieur (Rq) de la tension ou de la puissance réactive, sous la forme d'une première grandeur de commande pilote ($\Delta\alpha_{WR}$) possédant un signe négatif, et

e) un second générateur de courbes caractéristiques (KG2), qui évalue l'écart ($\Delta Q$) présent à l'entrée du régulateur de rang supérieur (Rq) réglant la tension ou la puissance réactive avec la fonction sinusoïdale, rapportée à la tension continue idéale à vide (Udi), de l'angle de déphasage entre la tension et le courant dans l'un des réseaux ($\sin\phi$) et ajoute l'écart de réglage au signal de sortie (Id*) du régulateur de rang supérieur (Rp) de la puissance réactive en tant que seconde grandeur de commande pilote ($\Delta IdV$) (figure 4).

4. Dispositif pour régler la transmission de puissance active et de puissance réactive entre deux réseaux électriques (A,B), qui sont raccordés par l'intermédiaire d'une section de transmission à haute tension et à courant continu (section "HGÜ"), et dans lequel chaque réseau est accouplé à la section HGÜ par l'intermédiaire d'un mutateur commandable (UR1,UR2), et l'un des mutateurs fonctionne en tant que redresseur et l'autre en tant qu'onduleur, et comportant

a) un régulateur subordonné de courant (Ri) servant à régler le courant dans la section HGÜ et qui prédétermine la grandeur de réglage de l'angle de commande ($\alpha_{GR}$) pour l'unité de commande du mutateur (UR1) fonctionnant en tant que redresseur,

b) un régulateur de puissance de rang supérieur (Rp) servant à régler la puissance active dans l'un des réseaux et qui prédétermine la valeur de consigne pour le régulateur de courant subordonné,

c) un régulateur de rang supérieur (Rq) pour la tension ou la puissance réactive dans l'un des réseaux et qui prédétermine la grandeur de réglage de l'angle de commande ($\alpha_{WR}$) pour l'unité de commande du mutateur (UR2) fonctionnant en tant qu'onduleur, caractérisé par

d) un troisième générateur de courbes caractéristiques (KG3), qui réalise l'approximation de la fonction sinusoïdale, rapportée à la tension continue idéale à vide (Udi), de l'angle de déphasage entre la tension et le courant dans l'un des réseaux (sin$\phi$), en fonction de la valeur de consigne (P*) de la puissance active, en tant que grandeur d'entrée, sous la forme d'une droite possédant une pente négative,

e) un troisième multiplicateur (M3) pour le signal de sortie du troisième générateur de courbes caractéristiques (KG3) et l'inverse du courant continu (Id) en tant que grandeurs d'entrée,

f) un premier multiplicateur (M1), qui forme une première grandeur de commande pilote ($\Delta\alpha_{WR}$) à partir de l'écart de réglage ($\Delta P$) présent à l'entrée du régulateur de rang supérieur (Rp) de la puissance réactive et du signal de sortie du troisième multiplicateur (M3) en tant que grandeur d'entrée et ajoute cet écart de réglage au signal de sortie du régulateur de rang supérieur (R1) de la tension et de la puissance réactive avec un signe négatif, et

g) un second multiplicateur (M2), qui forme une seconde grandeur de commande pilote ($\Delta$Idv) à partir de l'écart de réglage ($\Delta Q$) présent à l'entrée du régulateur de rang supérieur (Rq) de la tension et de la puissance réactive et du signal de sortie du troisième générateur de courbes caractéristiques (KG3) en tant que grandeurs d'entrée, et ajoute cet écart de réglage au signal de sortie du régulateur de rang supérieur (Rp) de la puissance active (figure 6).

5. Dispositif pour régler la transmission de puissance active et de puissance réactive entre deux réseaux électriques (A,B), qui sont raccordés par l'intermédiaire d'une section de transmission à haute tension et à courant continu (section "HGÜ"), et dans lequel chaque réseau est accouplé à la section HGÜ par l'intermédiaire d'un mutateur commandable, et l'un des mutateurs fonctionne en tant que redresseur et l'autre en tant qu'onduleur, et comportant

a) un régulateur subordonné de courant (Ri) servant à régler le courant dans la section HGÜ et qui prédétermine la grandeur de réglage de l'angle de commande ($\alpha_{GR}$) pour l'unité de commande du mutateur (UR1) fonctionnant en tant que redresseur,

b) un régulateur de puissance de rang supérieur (Rp) servant à régler la puissance active dans l'un des réseaux et qui prédétermine la valeur de consigne pour le régulateur de courant subordonné,

c) un régulateur de rang supérieur (Rq) pour la tension ou la puissance réactive dans l'un des réseaux et qui prédétermine la grandeur de réglage de l'angle de commande ($\alpha_{WR}$) pour l'unité de commande du mutateur (UR2) fonctionnant en tant qu'onduleur, caractérisé par

d) un troisième générateur de courbes caractéristiques (KG3), qui réalise l'approximation de la fonction sinusoïdale, rapportée à la tension continue idéale à vide (Udi), de l'angle de déphasage entre la tension et le courant dans l'un des réseaux (sin$\phi$), en fonction de la valeur de consigne (P*) de la puissance active, en tant que grandeur d'entrée, sous la forme d'une droite possédant une pente négative,

e) un quatrième générateur de courbes caractéristiques (KG4), qui réalise l'approximation de la fonction sinusoïdale, rapportée au produit de la tension continue idéale de ralenti par le courant continu (Udi*Id), de l'angle de déphasage entre la tension et le courant dans l'un des réseaux (sin$\phi$), en fonction de la valeur de consigne (P*) de la puissance active en tant que grandeur d'entrée, sous la forme d'une droite de pente négative,

f) un premier multiplicateur (M1), qui forme une première grandeur de commande pilote ($\Delta\alpha_{WR}$) à partir de l'écart de réglage ($\Delta P$) présent à l'entrée du régulateur de rang supérieur (Rp) de la puissance réactive et du signal de sortie du quatrième générateur de courbes caractéristiques (KG4) en tant que grandeurs d'entrée et ajoute cet écart de réglage au signal de sortie du régulateur de rang supérieur (R1) de la tension et de la puissance réactive avec un signe négatif, et

g) un second multiplicateur (M2), qui forme une seconde grandeur de commande pilote ($\Delta$IdV) à partir de l'écart de réglage ($\Delta$Q) présent à l'entrée du régulateur de rang supérieur (Rq) de la tension et de la puissance réactive et le signal de sortie du troisième générateur de courbes caractéristiques (KG3) en tant que grandeurs d'entrée, et ajoute cet écart de réglage au signal de sortie du régulateur de rang supérieur de la puissance active (Rq) (figure 7).

6. Dispositif suivant l'une des revendications 3 à 5, caractérisé par un régulateur subordonné de l'angle d'extinction (R1), qui prédétermine la grandeur de réglage de l'angle de commande ($\alpha_{WR}$) pour l'unité de commande (St2) du mutateur (UR2) fonctionnant en tant qu'onduleur, la valeur de consigne associée ($\gamma^*$) étant prédéterminée par le régulateur de rang supérieur (Rq) de la tension ou de la puissance réactive.

7. Dispositif suivant l'une des revendications 3 à 6, caractérisé respectivement par des cinquième et sixième générateurs de courbes caractéristiques (DVZ1,DVZ2) ayant des comportements de différentiation et de retardement et qui envoient respectivement le signal de sortie du régulateur de rang supérieur (Rp) de la puissance active et du régulateur (Rq) de la tension ou de la puissance réactive, à la place des écarts de réglage apparaissant à l'entrée respective du régulateur, en tant que grandeurs d'entrée aux premier et second générateurs de courbes caractéristiques (KG1,KG2) ou aux premier et second multiplicateurs (M1,M2) (figures 5,7).

FIG 1

FIG 4

FIG 5

FIG 2

FIG 3

FIG 6

FIG 7

FIG 8

FIG 9